# EUROPEAN PATENT SPECIFICATION

(11) **EP 2 860 294 B1**
(45) Date of publication and mention of the grant of the patent: **16.08.2017**
(21) Application number: 13804765.9
(22) Date of filing: 18.01.2013
(51) Int. Cl.: D04H 1/541, B60R 13/08, D04H 1/42, D04H 1/587

(54) **SOUNDPROOF COVER FOR AUTOMOBILE AND METHOD FOR MANUFACTURING SOUNDPROOF COVER FOR AUTOMOBILE**
SCHALLDICHTE ABDECKUNG FÜR FAHRZEUGE UND VERFAHREN ZUR HERSTELLUNG EINER SCHALLDICHTEN ABDECKUNG FÜR FAHRZEUGE
COUVERCLE INSONORISÉ POUR VÉHICULE AUTOMOBILE ET PROCÉDÉ DE FABRICATION D'UN COUVERCLE INSONORISÉ POUR AUTOMOBILE

(30) Priority: 12.06.2012 JP 2012133029
(43) Date of publication of application: 15.04.2015
(73) Proprietor: Nichias Corporation, Tokyo 104-8555 (JP)
(72) Inventor: MORI, Tadashi, Tokyo 104-8555 (JP); ARIMIZU, Kaname, Tokyo 104-8555 (JP)
(74) Representative: Müller-Boré & Partner Patentanwälte PartG mbB
(86) International application number: PCT/JP2013/050945
(87) International publication number: WO 2013/187081

(56) References cited:
- WO-A1-03/023108
- WO-A1-2008/018193
- WO-A1-2009/081760
- CN-A- 102 051 753
- JP-A- H07 102 461
- JP-A- H10 268 871
- JP-A- 2005 288 374
- JP-A- 2009 078 375
- JP-A- 2011 189 553
- US-A- 6 140 409
- US-A1- 2005 164 582

## Description

The invention relates to an automotive soundproof cover and a method for producing the automotive soundproof cover.

A number of sound sources are present inside an automobile, and various soundproofing measures have been employed taking account of comfort during driving and the effects on the surrounding environment.

In particular, a dedicated soundproof part referred to as "soundproof cover" is provided at a position close to a sound source that generates a loud noise (e.g., engine, transmission, or driveline device) to reduce the noise generated from the sound source (see Patent Document 1 (JP-A-2002-347535), for example).

A known soundproof cover utilizes a rigid cover (rigid body cover) obtained by forming a metal, polyamide, polypropylene, or the like as a sound insulation material to reduce noise (sound) emitted from a sound source such as an engine according to the mass law.

Attempts have been made to suppress an increase in inner surface echo (standing waves) due to reflection of sound between the sound source and the rigid cover by providing a sound absorbing material on part or the entirety of the inner surface of the rigid cover that is situated opposite to the sound source, or provide a space between the rigid cover and the sound source (i.e., separate the rigid cover and the sound source) by providing the rigid cover with respect to the sound source through a vibrating insulating body (e.g., rubber bush) to prevent a situation in which the rigid cover itself serves as a sound source due to solid-borne sound (vibrations) from the sound source.

Patent Document 1: JP-A-2002-347535

In recent years, a reduction in size of engines and the like has been desired, and it has been desired to use a soundproof cover that is not provided with a sound absorbing material, or use a soundproof cover in a state in which the soundproof cover comes in direct contact with a sound source. Therefore, a soundproof cover has been desired that exhibits the desired sound insulating properties, and exhibits high flame retardancy with respect to a sound source (e.g., engine) that is operated at a high temperature.

In view of the above situation, an object of the invention is to provide an automotive soundproof cover that exhibits the desired sound insulating properties and high flame retardancy, and a method that can easily produce the automotive soundproof cover.

The inventors of the invention conducted extensive studies in order to achieve the above object, and found that the above object can be achieved by an automotive soundproof cover that includes a fibrous formed article that includes two or more types of fibers, the fibrous formed article including 50 to 80 mass% of organic fibers, 10 to 40 mass% of flame retardant-containing fibers, and 5 to 20 mass% of an organic binder, the ratio of the total mass of the flame retardant included in the flame retardant-containing fibers to the total mass of the fibrous formed article being 0.01 to 1.8 mass%, and the flame retardant being a melt drip regulator, and a method for producing the automotive soundproof cover. This finding has led to the completion of the invention.

Specifically, several aspects of the invention provide the following.
(1) An automotive soundproof cover including a fibrous formed article that includes two or more types of fibers, the fibrous formed article including 50 to 80 mass% of organic fibers, 10 to 40 mass% of flame retardant-containing fibers, and 5 to 20 mass% of an organic binder, the ratio of the total mass of the flame retardant included in the flame retardant-containing fibers to the total mass of the fibrous formed article being 0.01 to 1.8 mass%, and the flame retardant being a melt drip regulator, wherein the melt drip regulator is one or more compounds selected from organophosphoric acids, organophosphates, and halogenated organophosphates.
(2) The automotive soundproof cover according to (1), wherein the flame retardant is a halogenated organophosphate.
(3) A method for producing the automotive soundproof cover according to (1) or (2), the method including:
   a mixing step that mixes 50 to 80 mass% of organic fibers, 10 to 40 mass% of flame retardant-containing fibers, and 5 to 20 mass% of low-melting-point fibers having a melting point lower than that of the organic fibers to obtain a fiber assembly; and
   a fusion step that exposes the fiber assembly to a temperature equal to or higher than the melting point of the low-melting-point fibers.

The aspects of the invention thus provide an automotive soundproof cover that exhibits the desired sound insulating properties and high flame retardancy (flame-extinguishing capability), and a method that can easily produce the automotive soundproof cover.

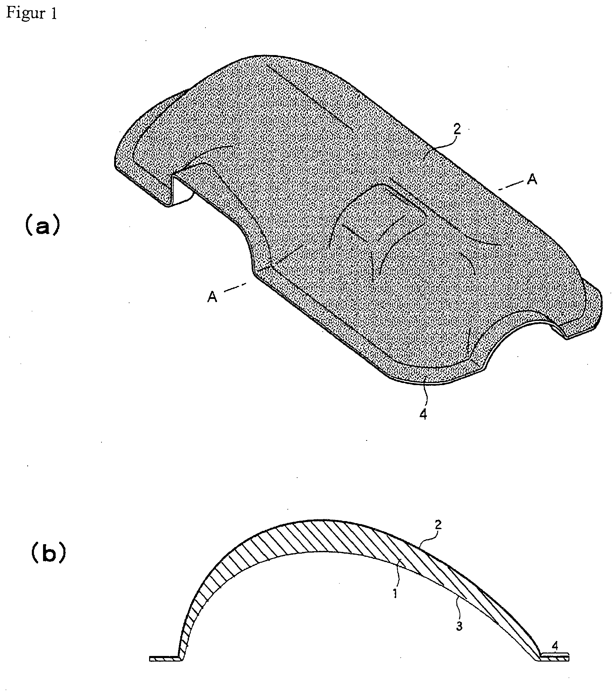

FIGS. 1A and 1B are views (perspective view and cross-sectional view) illustrating an example of an automotive soundproof cover according to the invention.

An automotive soundproof cover according to the invention is described below.

The automotive soundproof cover according to the invention includes a fibrous formed article that includes two or more types of fibers, the fibrous formed article including 50 to 80 mass% of organic fibers, 10 to 40 mass% of flame retardant-containing fibers, and 5 to 20 mass% of an organic binder, the ratio of the total mass of the flame retardant included in the flame retardant-containing fibers to the total mass of the fibrous formed article being 0.01 to 1.8 mass%, and the flame retardant being a melt drip regulator.

The flame retardant-containing fibers are used as at least one type of fiber among the two or more types of fibers that form the automotive soundproof cover according to the invention.

The term "flame retardant-containing fiber" used herein refers to a fiber having a structure in which the inner part of the fiber includes a flame retardant. The term "flame retardant-containing fiber" used herein includes a fiber having a structure in which only the inner part of the fiber includes a flame retardant, and a fiber having a structure in which the inner part and the outer surface of the fiber include a flame retardant, but excludes a fiber having a structure in which only the outer surface of the fiber includes a flame retardant.

It is preferable that the flame retardant-containing fiber have a structure in which the inner part of the fiber includes a flame retardant in a ratio of 50 to 100 mass% based on the total flame retardant included in the flame retardant-containing fiber, and more preferably a structure in which only the inner part of the fiber includes a flame retardant.

The melt drip regulator is used as the flame retardant included in the flame retardant-containing fibers that form the automotive soundproof cover according to the invention. The melt drip regulator is one or more compounds selected from organophosphoric acids, organophosphates, and halogenated organophosphates.

Note that the term "melt drip regulator" used herein refers to a substance that can put out a flame through a melt drip phenomenon when the automotive soundproof cover has ignited at a high temperature of 250°C or more.

A flame retardant is normally used that covers the surface of a combustion source with char (carbonized insulating layer) during combustion to suppress the spread of the fire into the inner part of the combustion source, and reduces the rate of spread and the amount of heat generation after ignition, for example. On the other hand, as mentioned obove, the melt drip regulator that is used as the flame retardant in connection with the invention puts out a flame through a melt drip phenomenon when the automotive soundproof cover has ignited, and differs from a normal flame retardant. Therefore, the melt drip regulator may be referred to as "extinguishing agent".

Examples of the organophosphates and halogenated organophosphates include triphenyl phosphate, tricresyl phosphate, trixylenyl phosphate, cresyl diphenyl phosphate, 2-ethylhexyl diphenyl phosphate, isopropylphenyl diphenyl phosphate, bis(isopropylphenyl) diphenyl phosphate, tris(isopropylphenyl) phosphate, di-2-ethylhexyl hydrogen phosphite, dilauryl hydrogen phosphite, a dialkyl hydrogen phosphite, dioleyl hydrogen phosphite, triisooctyl phosphite, diphenyl isodecyl phosphite, phenyl diisodecyl phosphite, triisodecyl phosphite, a trialkyl phosphite, trioleyl phosphite, tristearyl phosphite, trilauryl trithiophosphite, resorcinol bisdiphenyl phosphate, resorcinol bisdixylenyl phosphate, bisphenol A bisdiphenyl phosphate, tris(chloroethyl) phosphate, tris(β-chloropropyl) phosphate, tris(dichloropropyl) phosphate, tetrakis(2-chloroethyl)dichloroisopentyl diphosphate, a polyoxyalkylene bis(dichloroalkyl) phosphate, and the like.

Note that a flame retardant that covers the surface of a combustion source with char (carbonized insulating layer) during combustion to suppress the spread of the fire into the inner part of the combustion source (e.g., polyphosphatic carbamate) does not fall under the melt drip regulator used for the automotive soundproof cover according to the invention.

The mass ratio ((mass (g) of flame retardant included in flame retardant-containing fiber / mass (g) of flame retardant-containing fiber) × 100) of the flame retardant included in the flame retardant-containing fiber is not particularly limited, but is normally 1 to 10 mass%, appropriately 2 to 8 mass%, and more appropriately 3 to 6 mass%.

Examples of the flame retardant-containing fibers included in the fibrous formed article that forms the automotive soundproof cover according to the invention include (1) fibers formed of a flame-retardant polyester obtained by dispersing a flame retardant in a polyester, or a flame-retardant polyester obtained by introducing a structural unit or a substituent that corresponds to a flame retardant (i.e., a structural unit or a substituent derived from a flame retardant) into a polyester (hereinafter referred to as "flame-retardant polyester fibers"), and (2) flame-retardant composite fibers that are a composite of the flame-retardant polyester and a polyester having a melting point lower than that of the flame-retardant polyester (fibers) (hereinafter referred to as "thermally-bondable polyester").

Examples of the flame-retardant polyester fibers (1) include flame-retardant polyester fibers formed of a flame-retardant polyester obtained by mixing a component that corresponds to a flame retardant into a polyester that includes polyethylene terephthalate (PET), polybutylene terephthalate (PBT), polyethylene isophthalate (PEI), polycyclohexylenedimethylene terephthalate (PCHDT), polyethylene naphthalate (PEN), or the like as the main repeating unit, flame-retardant polyester fibers in which a flame retardant is dispersed by forming a flame-retardant polyester in the shape of fibers, a component that corresponds to a flame retardant being chemically bonded to the flame-retardant polyester by copolymerization, substitution, or the like, and flame-retardant polyester fibers into which a structural unit or a substituent that corresponds to a flame retardant is introduced.

When the flame-retardant polyester fibers include an organophosphate or a halogenated organophosphate as the flame retardant, the phosphorus content in the flame-retardant polyester is preferably about 500 to about 10,000 ppm, and more preferably about 1000 to about 5000 ppm.

When the flame-retardant polyester fibers have a structure in which a flame retardant is dispersed in a polyester, the flame-retardant polyester fibers may suitably be produced by mixing and melting the desired amounts of the polyester and the flame retardant, extruding the molten mixture from a die in the shape of fibers, and cooling and solidifying the extruded mixture (melt spinning method), for example.

Known flame-retardant polyester fibers may also be used as the flame-retardant polyester fibers. Examples of such known flame-retardant polyester fibers include the flame-retardant polyester fibers disclosed in JP-A-51-82392, JP-A-55-7888, JP-B-55-41610, and the like.

Examples of particularly preferable flame-retardant polyester fibers include fibers formed of a polyester in which an organophosphoric acid compound represented by the following general formula is dispersed, and fibers formed of a polyester to which the organophosphoric acid compound represented by the following general formula is chemically bonded by copolymerization, substitution, or the like. 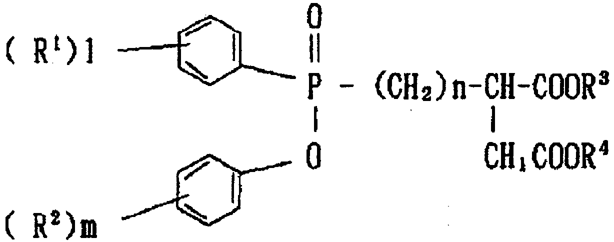 wherein R¹ and R² are a hydrogen atom, a halogen atom, or a hydrocarbon group having 6 or less carbon atoms, provided that R¹ and R² are either identical or different, R³ and R⁴ are a hydrogen atom, a hydrocarbon group having 7 or less carbon atoms, or a group represented by -(R⁵O)ᵣH, provided that R³ and R⁴ are either identical or different, R⁵ is an ethylene group, a propylene group, or a butylene group, r is an integer from 1 to 10,1 and m are an integer from 0 to 4, and n is 0, 1, or 2.

Examples of the flame-retardant polyester included in the flame-retardant composite fibers (2) that are a composite of the flame-retardant polyester and the thermally-bondable polyester include those mentioned above in connection with the flame-retardant polyester fibers.

It is preferable that the thermally-bondable polyester included in the flame-retardant composite fibers (2) function as a binder for the flame-retardant polyester, and have a melting point lower than that of the flame-retardant polyester by at least 20°C.

If the difference in melting point between the thermally-bondable polyester and the flame-retardant polyester is less than 20°C, the orientation of the flame-retardant polyester may easily deteriorate due to a high-temperature treatment that may be required when producing the flame-retardant composite fibers, and the durability of the flame retardant-containing fibers may easily deteriorate due to a decrease in the reinforcing effect achieved by the thermally-bondable polyester. Moreover, the properties of the flame-retardant polyester (matrix) may easily deteriorate.

It is preferable that the thermally-bondable polyester have a melting point of 110 to 220°C, and more preferably 130 to 200°C. When the melting point of the thermally-bondable polyester is within the above range, the thermally-bondable polyester easily exhibits a reinforcing effect, and it is possible to easily provide flame retardant-containing fibers that exhibit excellent flame retardancy.

The term "melting point" used herein in connection with the flame-retardant polyester and the thermally-bondable polyester refers to a temperature at which a striped pattern caused by orientation disappears when fibers formed of the flame-retardant polyester or the thermally-bondable polyester are placed on a heating plate in a cross-shaped pattern, and heated from room temperature at a rate of 5°C/min.

Examples of the thermally-bondable polyester include, but are not limited to, polyesters obtained by bonding one or more acid components selected from terephthalic acid, isophthalic acid, phthalic acid, p-hydroxybenzoic acid, sodium 5-sulfoisophthalate, napthalenedicarboxylic acid, oxalic acid, adipic acid, sebacic acid, cyclohexylenedicarboxylic acid, and the like and one or more glycol components selected from ethylene glycol, diethylene glycol, triethylene glycol, propanediol, butanediol, pentanediol, hexanediol, neopentyl glycol, polyethylene glycol, and the like through an ester linkage.

When the flame retardant-containing fibers that form the automotive soundproof cover according to the invention are the flame-retardant composite fibers that are a composite of the flame-retardant polyester and the thermally-bondable polyester, the flame retardant-containing fibers may include the flame-retardant polyester and the thermally-bondable polyester in an arbitrary ratio. Note that it is preferable that the flame retardant-containing fibers have a flame-retardant polyester content of 20 to 80 mass%, more preferably 30 to 70 mass%, and still more preferably 40 to 60 mass%.

When the flame-retardant polyester content in the flame retardant-containing fibers is within the above range, it is possible to easily provide the flame-retardant composite fibers with the desired flame retardancy.

The flame-retardant polyester and the thermally-bondable polyester may form the flame-retardant composite fibers to have a sheath-core structure in which the flame-retardant polyester serves as a core component, and the thermally-bondable polyester serves as a sheath component, a multilayer structure or a side-by-side structure in which the flame-retardant polyester and the thermally-bondable polyester are situated adjacently, or the like.

It is preferable that the automotive soundproof cover according to the invention have a structure in which the flame retardant is not exposed on the outer surface of the automotive soundproof cover. Therefore, it is preferable that the flame-retardant composite fibers have a structure in which the flame retardant included therein is not exposed on the outer surface of the flame-retardant composite fibers.

It is preferable that the flame-retardant composite fibers have a structure in which the thermally-bondable polyester accounts for 50% or more of the outer surface area of the flame-retardant composite fibers. Examples of flame-retardant composite fibers having such a structure include flame-retardant composite fibers having an eccentric sheath-core structure, flame-retardant composite fibers having a multilayer structure, flame-retardant composite fibers having a side-by-side structure, and the like. It is preferable that the flame-retardant composite fibers have a structure in which the thermally-bondable polyester accounts for 100% of the outer surface area of the flame-retardant composite fibers. Examples of flame-retardant composite fibers having such a structure include flame-retardant composite fibers having a sheath-core structure.

When the flame retardant included in the flame-retardant composite fibers is exposed on the outer surface of the flame-retardant composite fibers to only a small extent, it is possible to easily provide the fibrous formed article with the desired flame retardancy.

It is preferable that the flame-retardant composite fibers have a hollow sheath-core structure, and more preferably an irregular hollow sheath-core structure, from the viewpoint of the improving the reinforcement capability together with flame retardancy.

The fibrous formed article that forms the automotive soundproof cover according to the invention includes two or more types of fibers including the flame retardant-containing fibers. The fibrous formed article includes the organic fibers and the like (described below) in addition to the flame retardant-containing fibers.

It is appropriately that the two or more types of fibers included in the fibrous formed article be short fibers (staples).

Examples of the organic fibers included in the fibrous formed article that forms the automotive soundproof cover according to the invention include polyester fibers, polyamide fibers, polyethylene fibers, polypropylene fibers, and the like.

Examples of the polyester fibers that may be used as the organic fibers included in the fibrous formed article that forms the automotive soundproof cover according to the invention include polyethylene terephthalate (PET) fibers, polybutylene terephthalate (PBT) fibers, polyethylene isophthalate (PEI) fibers, polycyclohexylenedimethylene terephthalate (PCHDT) fibers, polyethylene naphthalate (PEN) fibers, and the like.

Examples of the polyamide fibers that may be used as the organic fibers included in the fibrous formed article that forms the automotive soundproof cover according to the invention include 6-nylon fibers, 6,6-nylon fibers, 11-nylon fibers, 12-nylon fibers, and the like.

Examples of the polyethylene fibers that may be used as the organic fibers included in the fibrous formed article that forms the automotive soundproof cover according to the invention include low-density polyethylene fibers, high-density polyethylene fibers, and the like.

Examples of the polypropylene fibers that may be used as the organic fibers included in the fibrous formed article that forms the automotive soundproof cover according to the invention include polypropylene fibers, fibers having a two-layer structure obtained by coating the surface of polypropylene fibers with a polyethylene resin in order to improve adhesion, and the like.

Examples of the organic binder included in the fibrous formed article that forms the automotive soundproof cover according to the invention include low-melting-point fibers that have a melting point lower than that of the organic fibers, or have a melting point lower than those of the organic fibers and the flame retardant-containing fibers.

The low-melting-point fibers are preferably fibers that have a melting point lower than that of the organic fibers by at least 20°C, or have a melting point lower than that of the organic fibers or the flame retardant-containing fibers, whichever is lower, by at least 20°C, and more preferably fibers that have a melting point lower than that of the organic fibers by at least 50°C, or have a melting point lower than that of the organic fibers or the flame retardant-containing fibers, whichever is lower, by at least 50°C.

When the organic binder has a melting point lower than that of the organic fibers, or has a melting point lower than those of the organic fibers and the flame retardant-containing fibers, the organic binder easily melts to bind the organic fibers and the flame retardant-containing fibers in an advantageous manner.

The organic binder may be appropriately selected from organic binders having a melting point of about 80 to about 200°C.

The term "melting point" used herein in connection with the organic fibers, the flame retardant-containing fibers, and the organic binder refers to a temperature at which a striped pattern caused by orientation disappears when the organic fibers, the flame retardant-containing fibers, or the organic binder are placed on a heating plate in a cross-shaped pattern, and heated from room temperature at a rate of 5°C/min.

Specific examples of the organic binder included in the fibrous formed article that forms the automotive soundproof cover according to the invention include polyester fibers, thermosetting resins, thermoplastic resins (thermoplastic resin fibers), and the like.

Examples of the polyester fibers that may be used as the organic binder included in the fibrous formed article that forms the automotive soundproof cover according to the invention include one or more types of polyester fibers selected from polyethylene terephthalate (PET) fibers, polybutylene terephthalate (PBT) fibers, polyethylene isophthalate (PEI) fibers, polycyclohexylenedimethylene terephthalate (PCHDT) fibers, polyethylene naphthalate (PEN) fibers, and the like.

Examples of the thermosetting resin that may be used as the organic binder included in the fibrous formed article that forms the automotive soundproof cover according to the invention include one or more types of thermosetting resins selected from a thermosetting phenol resin, an epoxy resin, a melamine resin, a urea resin, an unsaturated polyester resin, an alkyd resin, a polyurethane resin, a thermosetting polyimide resin, and the like.

Examples of the thermoplastic resin that may be used as the organic binder included in the fibrous formed article that forms the automotive soundproof cover according to the invention include one or more types of thermoplastic resins selected from a polyethylene resin, a polypropylene resin, a polystyrene resin, a polyvinyl acetate resin, a polyvinyl acetate-ethylene copolymer resin, an acrylonitrile-butadiene-styrene (ABS) resin, an acrylonitrile-styrene (AS) resin, an acrylic resin, a methacrylic resin, and the like.

The fibrous formed article that forms the automotive soundproof cover according to the invention includes 50 to 80 mass% of the organic fibers, 10 to 40 mass% of the flame retardant-containing fibers, and 5 to 20 mass% of the organic binder.

The content of the organic fibers in the fibrous formed article that forms the automotive soundproof cover according to the invention is 50 to 80 mass%, preferably 55 to 75 mass%, and more preferably 60 to 70 mass%.

When the content of the organic fibers in the fibrous formed article that forms the automotive soundproof cover according to the invention is within the above range, it is possible to provide the fibrous formed article with the desired sound insulating properties and the like.

The content of the flame retardant-containing fibers in the fibrous formed article that forms the automotive soundproof cover according to the invention is 10 to 40 mass%, preferably 15 to 35 mass%, and more preferably 20 to 30 mass%.

When the content of the flame retardant-containing fibers in the fibrous formed article that forms the automotive soundproof cover according to the invention is within the above range, it is possible to provide the fibrous formed article with the desired flame retardancy and the like.

The content of the organic binder in the fibrous formed article that forms the automotive soundproof cover according to the invention is 5 to 20 mass%, preferably 5 to 15 mass%, and more preferably 7 to 15 mass%.

When the content of the organic binder in the fibrous formed article that forms the automotive soundproof cover according to the invention is within the above range, it is possible to easily provide the fibrous formed article that includes the organic fibers and the flame retardant-containing fibers in the desired ratio with the desired flame retardancy, sound insulating properties, and the like.

The ratio ((total mass (g) of flame retardant included in flame retardant-containing fibers / total mass (g) of fibrous formed article) × 100) of the total mass of the flame retardant included in the flame retardant-containing fibers to the total mass of the fibrous formed article that forms the automotive soundproof cover according to the invention is 0.01 to 1.8 mass%, preferably 0.1 to 1.8 mass%, and more preferably 0.5 to 1.6 mass%.

When the ratio of the total mass of the flame retardant included in the flame retardant-containing fibers to the total mass of the fibrous formed article that forms the automotive soundproof cover according to the invention is within the above range, it is possible to provide the fibrous formed article (automotive soundproof cover) with the desired flame retardancy (flame-extinguishing capability).

The automotive soundproof cover according to the invention exhibits the desired flame retardancy (flame-extinguishing capability) since the fibrous formed article includes the desired amount of flame retardant-containing fibers.

When the fibrous formed article includes a flame retardant itself instead of the flame retardant-containing fibers, or includes fibers having a structure in which only the outer surface thereof includes a flame retardant instead of the flame retardant-containing fibers, a situation may easily occur in which the flame retardant is locally distributed on the outer surface of the fibrous formed article. In such a case, the surface of the fibrous formed article may be easily graphitized, and the distance of spread may increase when the fibrous formed article is subjected to the UL (Underwriters Laboratories) 94 V-0 test (flammability test), although the total combustion time tends to decrease.

If the ratio of the total mass of the flame retardant included in the flame retardant-containing fibers to the total mass of the fibrous formed article is too small, the total combustion time may increase when the fibrous formed article is subjected to the UL 94 V-0 test. If the ratio of the total mass of the flame retardant included in the flame retardant-containing fibers to the total mass of the fibrous formed article is too large, the distance of spread may increase when the fibrous formed article is subjected to the UL 94 V-0 test.

It is preferable that the fibrous formed article that forms the automotive soundproof cover according to the invention have a total combustion time of 50 seconds or less, more preferably 45 seconds or less, and still more preferably 40 seconds or less, when the fibrous formed article is subjected to the UL-94 V-0 test.

Note that the term "total combustion time" used herein refers to the total flaming duration measured when the upper part (dimension: 10 mm) of a strip-like specimen (length: 127 mm, width: 12.7 mm) is held using a clamp, and an operation that brings a flame into contact with the lowermost part of the specimen, and removes the flame is performed 10 times.

It is preferable that the fibrous formed article that forms the automotive soundproof cover according to the invention have a distance of spread of 117 mm or less, more preferably 115 mm or less, and still more preferably 110 mm or less, when the fibrous formed article is subjected to the UL-94 V-0 test.

Note that the term "distance of spread" used herein refers to the length of part of a specimen that is burnt when the upper part (dimension: 10 mm) of a strip-like specimen (length: 127 mm, width: 12.7 mm) is held using a clamp, a flame is brought into contact with the lowermost part of the specimen, and the flame is then removed.

It is preferable that the fibrous formed article that forms the automotive soundproof cover according to the invention have a glowing time of 30 seconds or less, more preferably 20 seconds or less, and still more preferably 10 seconds or less, when the fibrous formed article is subjected to the UL-94 V-0 test.

Note that the term "glowing time" used herein refers to the time in which a specimen glows when the upper part (dimension: 10 mm) of a strip-like specimen (length: 127 mm, width: 12.7 mm) is held using a clamp, a flame is brought into contact with the lowermost part of the specimen, and the flame is then removed.

It is preferable that a molten droplet from the fibrous formed article that forms the automotive soundproof cover according to the invention does not have combustibility when the fibrous formed article is subjected to the UL-94 V-0 test.

Note that the expression "a molten droplet from the fibrous formed article that forms the automotive soundproof cover according to the invention does not have combustibility" used herein means that a molten droplet from a specimen formed when the upper part (dimension: 10 mm) of a strip-like specimen (length: 127 mm, width: 12.7 mm) is held using a clamp, a flame is brought into contact with the lowermost part of the specimen, and the flame is then removed, does not ignite absorbent cotton that is situated under the droplet.

It is preferable that the fibrous formed article that forms the automotive soundproof cover according to the invention have an airflow resistance of 1.4×10⁴ to 2.5×10⁴ Pa s/m², more preferably 1.5×10⁴ to 2.4×10⁴ Pa s/m², and still more preferably 1.6×10⁴ to 2.3×10⁴ Pa s/m².

When the airflow resistance of the fibrous formed article that forms the automotive soundproof cover according to the invention is within the above range, the sound-absorbing capability (acoustic absorption coefficient) and the drip rate upon ignition can be easily maintained within appropriate ranges.

Note that the term "airflow resistance" used herein refers to a value measured in accordance with JIS L 1096:2000.

It is preferable that the fibrous formed article that forms the automotive soundproof cover according to the invention have a Young's modulus of 1.5×10⁴ to 8.0×10⁴ Pa, more preferably 1.6×10⁴ to 7.0×10⁴ Pa, and still more preferably 1.6×10⁴ to 6.0×10⁴ Pa.

The automotive soundproof cover according to of the invention easily exhibits the desired strength when the fibrous formed article has a Young's modulus within the above range.

Note that the term "Young's modulus" used herein refers to a value measured in accordance with JIS K 7127.

It is preferable that the fibrous formed article that forms the automotive soundproof cover according to the invention have a bulk density of 0.005 to 0.4 g/cm³, more preferably 0.01 to 0.2 g/cm³, and still more preferably 0.025 to 0.1 g/cm³.

When the fibrous formed article that forms the automotive soundproof cover according to the invention has a bulk density within the above range, voids can be formed in the fibrous formed article in the desired ratio, and a sound-absorbing capability based on air viscous resistance can be effectively achieved.

Note that the term "bulk density (g/cm³)" used herein in connection with the fibrous formed article refers to a value obtained by measuring the mass M(g) and the volume V (cm³) of the fibrous formed article at room temperature, and dividing the mass M by the volume V (i.e., calculating the ratio "M/V").

It is preferable that the fibrous formed article that forms the automotive soundproof cover according to the invention have a basis weight of 150 to 2000 g/cm², more preferably 250 to 1500 g/cm², and still more preferably 500 to 1000 g/cm².

When the fibrous formed article that forms the automotive soundproof cover according to the invention has a basis weight within the above range, voids can be formed in the fibrous formed article in the desired ratio, and a sound-absorbing capability based on air viscous resistance can be effectively achieved.

Note that the term "basis weight (g/cm²)" used herein in connection with the fibrous formed article refers to a value calculated from the mass of a square (10×10 cm) fibrous formed article.

It is preferable that the fibrous formed article that forms the automotive soundproof cover according to the invention have a thickness of 1 to 100 mm, more preferably 1.5 to 50 mm, and still more preferably 1.5 to 30 mm.

The automotive soundproof cover according to the invention effectively exhibits a sound-absorbing capability when the fibrous formed article has a thickness within the above range.

The thickness of the fibrous formed article that forms the automotive soundproof cover according to the invention may be measured using calipers or the like.

The automotive soundproof cover according to the invention may be used as a soundproof cover for an automotive engine, an automotive transmission, an automotive driveline device, and the like. In particular, the automotive soundproof cover according to one embodiment of the invention is suitable as a soundproof cover for an engine.

The fibrous formed article may be used directly as the automotive soundproof cover according to the invention, or a skin material may be provided on the outer surface of the fibrous formed article to produce a soundproof cover provided with a skin material.

FIGS. 1A and 1B are views illustrating an example of the automotive soundproof cover according to the invention. FIG. 1A is a perspective view illustrating an automotive soundproof cover 1 provided with a skin material 2, and FIG. 1B is a schematic cross-sectional view taken along the line A-A' in FIG. 1A.

The skin material 2 is provided on the outer surface of the automotive soundproof cover 1. The skin material 2 may be a nonwoven fabric or a woven fabric formed of organic fibers or inorganic fibers such as synthetic resin fibers (e.g., polyester fibers or polypropylene fibers), natural fibers (e.g., pulp fibers or kenaf fibers), glass fibers, metal fibers, ceramic fibers, or carbon fibers.

It is preferable that the nonwoven fabric or the woven fabric have a basis weight of 50 to 600 g/cm², and more preferably 150 to 400 g/cm².

It is preferable to apply a resin (e.g., vinyl acetate resin, vinyl acetate-ethylene copolymer resin, acrylic resin, acrylonitrile-styrene-butadiene copolymer resin, silicone resin, or moisture-curing urethane resin) to the skin material 2 as a viscoelastic material in order to provide adhesion to the soundproof cover 1 and vibration-damping properties.

The viscoelastic material is preferably applied in an amount of 100 to 600 g/cm², and more preferably 200 to 600 g/cm².

An inner surface 3 of the soundproof cover 1 is situated opposite to an engine or the like that is a sound source. The inner surface 3 may be covered with a nonwoven fabric, a woven fabric, or a porous coat prepared by binding a scale clay mineral (e.g., foam vermiculite, muscovite, or biotite) using a binder in order to prevent scattering of the material and implement reinforcement.

The automotive soundproof cover according to the invention may suitably be produced using a method for producing an automotive soundproof cover according to the invention (see below), for example.

Since the automotive soundproof cover according to the invention includes a specific amount of the melt drip regulator, when the soundproof cover has ignited due to a flame from a spark plug or the like provided in an automobile, the soundproof cover promptly melts around the ignition area, and drips upon melting while putting out the flame. This makes it possible to suppress the spread of the fire. Moreover, the molten droplet drips onto the ignition source, and puts out the flame from the ignition source.

Therefore, it is possible to provide an automotive soundproof cover including a fibrous formed article that exhibits the desired sound insulating properties and high flame retardancy (flame-extinguishing capability).

The method for producing an automotive soundproof cover according to the invention is described below.

The method for producing an automotive soundproof cover according to the invention includes a mixing step that mixes 50 to 80 mass% of organic fibers, 10 to 40 mass% of flame retardant-containing fibers, and 5 to 20 mass% of low-melting-point fibers having a melting point lower than that of the organic fibers to obtain a fiber assembly, and a fusion step that exposes the fiber assembly to a temperature equal to or higher than the melting point of the low-melting-point fibers.

Examples of the organic fibers and the flame retardant-containing fibers used in connection with the method for producing an automotive soundproof cover according to the invention include those mentioned above in connection with the automotive soundproof cover according to the invention.

Examples of the low-melting-point fibers (having a melting point lower than that of the organic fibers) used in connection with the method for producing an automotive soundproof cover according to the invention include those mentioned above in connection with the automotive soundproof cover according to the invention mentioned obove.

It is preferable that the low-melting-point fibers have a melting point of about 80 to about 200°C.

In the mixing step included in the method for producing an automotive soundproof cover according to the invention, the organic fibers, the flame retardant-containing fibers, and the low-melting-point fibers having a melting point lower than those of the organic fibers and the flame retardant-containing fibers are mixed.

In the mixing step included in the method for producing an automotive soundproof cover according to the invention, 50 to 80 mass% of the organic fibers, 10 to 40 mass% of the flame retardant-containing fibers, and 5 to 20 mass% of the low-melting-point fibers having a melting point lower than those of the organic fibers and the flame retardant-containing fibers are mixed. It is preferable to mix 55 to 75 mass% of the organic fibers, 15 to 35 mass% of the flame retardant-containing fibers, and 5 to 15 mass% of the low-melting-point fibers having a melting point lower than those of the organic fibers and the flame retardant-containing fibers. It is more preferable to mix 60 to 70 mass% of the organic fibers, 20 to 30 mass% of the flame retardant-containing fibers, and 7 to 15 mass% of the low-melting-point fibers having a melting point lower than those of the organic fibers and the flame retardant-containing fibers.

In the mixing step included in the method for producing an automotive soundproof cover according to the invention, the organic fibers, the flame retardant-containing fibers, and the organic binder may be mixed using various mixing devices. Examples of the mixing devices include a mixer, a triple roll mill, a bead mill, an extruder, a kneader, and the like.

The mixing conditions using the mixing device may be appropriately set so that the organic fibers, the flame retardant-containing fibers, and the organic binder are uniformly dispersed.

After mixing the organic fibers, the flame retardant-containing fibers, and the organic binder using the mixing device, the mixture is optionally molded to have a shape close to the desired shape using a mold or the like to obtain a fiber assembly.

The method for producing an automotive soundproof cover according to the invention includes the fusion step that exposes the fiber assembly to a temperature equal to or higher than the melting point of the low-melting-point fibers.

In the fusion step, the fiber assembly is preferably exposed to a temperature lower than the melting point of the organic fibers and the melting point of the flame retardant-containing fibers that form the fiber assembly. In this case, the organic fibers and the flame retardant-containing fibers can be easily fused while maintaining the shape of the organic fibers and the flame retardant-containing fibers that form the fiber assembly by controlling the temperature during the fusion step.

The details of an automotive soundproof cover produced using the method for producing an automotive soundproof cover according to the invention are the same as those described above in connection with the automotive soundproof cover according to the invention.

When the automotive soundproof cover according to the invention has a structure in which the skin material 2 is provided on the outer surface (see FIGS. 1A and 1B), the soundproof cover 1 and the skin material 2 may be bonded by hot press forming using an upper die and a lower die that make a pair and have a forming surface corresponding to the external shape of the sound source (e.g., engine) in a state in which the soundproof cover 1 and the skin material 2 are stacked, for example.

The soundproof cover 1 and the skin material 2 are bonded by hot press forming through the viscoelastic material applied to the skin material 2 to have the desired shape. The hot press forming temperature is preferably equal to or higher than the curing temperature of the viscoelastic material applied to the skin material 2, and the hot press forming pressure is appropriately set taking account of the thickness of the desired soundproof cover 1. When the upper die and the lower die have a flat peripheral area, it is possible to obtain a soundproof cover provided with a skin material in which a peripheral edge 4 is integrally formed.

The method for producing an automotive soundproof cover according to the invention that includes the mixing step and the fusion step can easily produce an automotive soundproof cover that exhibits the desired sound insulating properties and high flame retardancy.

The invention is further described below by way of examples. Note that the following examples are intended for illustrative purposes only, and the invention is not limited to the following examples.

### Examples 1 to 6 and Comparative Examples 1 and 2

### 1. Mixing step

Polyethylene terephthalate (PET) fibers (melting point: 230°C) or 6-nylon fibers (melting point: 225°C) (organic fibers), flame-retardant polyester fibers in which 4 mass% of tris(β-chloropropyl) phosphate (flame retardant) was dispersed in a polyester (flame retardant-containing fibers), and polyester fibers (melting point: 150°C) or a thermosetting phenol resin (thermosetting temperature: 180°C) (low-melting-point fibers) were mixed using a mixer (dry mixing) in the ratio shown in Table 1 so that the ratio of the total mass of the flame retardant included in the flame retardant-containing fibers to the total mass of the resulting fibrous formed article shown in Table 1 was achieved to obtain a fiber assembly.

In Table 1, the item "Content of flame retardant" corresponds to the ratio (mass%) of the total mass of the flame retardant included in the flame retardant-containing fibers to the total mass of the fibrous formed article.

### 2. Fusion step

The fiber assembly was heated and melted at 170°C (i.e., a temperature equal to or higher than the melting point of the low-melting-point fibers) to obtain a fibrous formed article having a felt-like porous structure (shape).

The bulk density, the airflow resistance, and the Young's modulus of the fibrous formed article were measured. The results are shown in Table 1.

### Evaluation of flame retardancy

The UL 94 V-0 test was performed using a strip-like specimen obtained by cutting the fibrous formed article to have a length of 127 mm, a width of 12.7 mm, and a thickness of 3.2 mm to measure the total combustion time (sec), the distance of spread (mm), the glowing time (sec), and the molten droplet combustibility (presence or absence of ignition of absorbent cotton). The results are shown in Table 1.

A case where the total combustion time was 50 seconds or less, the distance of spread was 117 mm or less, the glowing time was 30 seconds or less, and ignition of absorbent cotton did not occur (determined by the UL 94 V-0 test) was evaluated as "Acceptable" (overall evaluation), and a case where at least one of these criteria was not satisfied was evaluated as "Unacceptable" (overall evaluation). The results are shown in Table 1. In Table 1, ">50" means "more than 50 seconds", and ">117" means "more than 117 mm".

**TABLE 1**

| | | | Comparative Example 1 | Example 1 | Example 2 | Example 3 | Example 4 | Comparative Example 2 | Example 5 | Example 6 |
|---|---|---|---|---|---|---|---|---|---|---|
| Organic fibers | PET fibers | (mass%) | 30 | 50 | 60 | 70 | 80 | 90 | - | 60 |
| | 6-nylon fibers | | - | - | - | - | - | - | 60 | - |
| Flame retardant-containing fibers | | | 60 | 40 | 30 | 20 | 10 | 0 | 30 | 30 |
| Organic binder | Polyester fibers | | 10 | 10 | 10 | 10 | 10 | 10 | 10 | - |
| | Phenol resin | | - | - | - | - | - | - | - | 10 |
| Content of flame retardant | | | 2.4 | 1.6 | 1.2 . | 0.8 | 0.4 | 0 | 1.2 | 1.2 |
| Bulk density (g/cm³) | | | 0.05 | 0.05 | 0.05 | 0.05 | 0.05 | 0.05 | 0.05 | 0.05 |
| Airflow resistance (Pa sec/m²) | | | 1.98×10⁴ | 2.00×10⁴ | 2.03×10⁴ | 2.03×10⁴ | 2.05×10⁴ | 2.06×10⁴ | 2.04×10⁴ | 2,26×10⁴ |
| Young's modulus (Pa) | | | 2.35×10⁴ | 2.32×10⁴ | 2.27×10⁴ | 2.24×10⁴ | 2.25×10⁴ | 2.20×10⁴ | 2.40×10⁴ | 2.30×10⁴ |
| UL 94 V-0 test | Total combustion time (sec) | | 40 | 46 | 38 | 40 | 45 | >50 | 45 | 40 |
| | Distance of spread (mm) | | >117 | 116 | 73 | 84 | 115 | >117 | 115 | 115 |
| | Glowing time (sec) | | 0 | 0 | 0 | 0 | 0 | 0 | 0 | 0 |
| | Molten droplet combustibility | | Ignition did not occur | Ignition did not occur | Ignition did not occur | Ignition did not occur | Ignition did not occur | Ignition did not occur | Ignition did not occur | Ignition did not occur |
| | Overall evaluation | | Unacceptable | Acceptable | Acceptable | acceptable | Acceptable | Unacceptable | Acceptable | Acceptable |

### Examples 7 and 8

A fiber assembly having the composition shown in Table 2 was obtained in the same manner as in Example 3, except that flame-retardant polyester fibers in which 2 mass% of tris(β-chloropropyl) phosphate (flame retardant) was dispersed in a polyester (Example 7), or flame-retardant polyester fibers in which 8 mass% of tris(β-chloropropyl) phosphate (flame retardant) was dispersed in a polyester (Example 8), were used as the flame retardant-containing fibers in the mixing step instead of the flame-retardant polyester fibers in which 4 mass% of tris(β-chloropropyl) phosphate (flame retardant) was dispersed in a polyester, and the fusion step was performed to obtain a fibrous formed article having a felt-like porous structure (shape).

In Table 2, the item "Content of flame retardant" corresponds to the ratio (mass%) of the total mass of the flame retardant included in the flame retardant-containing fibers to the total mass of the fibrous formed article.

The bulk density, the airflow resistance, and the Young's modulus of the fibrous formed article were respectively measured. The results are shown in Table 2.

### Evaluation of flame retardancy

The flame retardancy was evaluated as described above using the fibrous formed article. The results are shown in Table 2.

**TABLE 2**

| | | | Example 7 | Example 3 | Example 8 |
|---|---|---|---|---|---|
| Organic fibers | PET fibers | (mass%) | 70 | 70 | 70 |
| Flame retardant-containing fibers | Flame retardant: 2 wt% | | 20 | - | - |
| | Flame retardant: 4 wt% | | - | 20 | - |
| | Flame retardant: 8 wt% | | - | - | 20 |
| Organic binder | Polyester fibers | | 10 | 10 | 10 |
| Content of flame retardant | | | 0.4 | 0.8 | 1.6 |
| Bulk density (g/cm³) | | | 0.05 | 0.05 | 0.05 |
| Airflow resistance (Pa sec/m²) | | | 2.02×10⁴ | 2.03×10⁴ | 2.02×10⁴ |
| Young's modulus (Pa) | | | 2.25×10⁴ | 2.24×10⁴ | 2.20×10⁴ |
| UL 94 V-0 test | Total combustion time (sec) | | 47 | 40 | 44 |
| | Distance of spread (mm) | | 115 | 84 | 115 |
| | Glowing time (sec) | | 0 | 0 | 0 |
| | Molten droplet combustibility | | Ignition did not occur | Ignition did not occur | Ignition did not occur |
| | Overall evaluation | | Acceptable | Acceptable | Acceptable |

### Comparative Examples 3 and 4

A fiber assembly having the composition shown in Table 3 was obtained in the same manner as in Example 3, except that polyester fibers of which the outer surface was covered with tris(β-chloropropyl) phosphate (4 mass%) were used as the flame retardant-containing fibers in the mixing step instead of the flame-retardant polyester fibers in which 4 mass% of tris(β-chloropropyl) phosphate (flame retardant) was dispersed in a polyester (Comparative Example 3), or tris(β-chloropropyl) phosphate (flame retardant) was used in the mixing step instead of the flame-retardant polyester fibers in which 4 mass% of tris(β-chloropropyl) phosphate (flame retardant) was dispersed in a polyester (Comparative Example 4), and the fusion step was performed to obtain a fibrous formed article having a felt-like porous structure (shape).

In Table 3, the item "Content of flame retardant" corresponds to the ratio (mass%) of the total mass of the flame retardant included in the flame retardant-containing fibers to the total mass of the fibrous formed article (or the ratio (mass%) of the mass of the flame retardant to the total mass of the fibrous formed article).

The bulk density, the airflow resistance, and the Young's modulus of the fibrous formed article were respectively measured. The results are shown in Table 3.

### Evaluation of flame retardancy

The flame retardancy was evaluated as described above using the fibrous formed article. The results are shown in Table 3. In Table 3, ">117" means "more than 117 mm".

**TABLE 3**

| | | | Example 3 | Comparative Example 3 | Comparative Example 4 |
|---|---|---|---|---|---|
| Organic fibers | PET fibers | (mass%) | 70 | 70 | 89 |
| Flame retardant-containing fibers | Flame retardant: 4 wt% | | 20 | - | - |
| Fibers covered with flame retardant (4 wt%) | | | - | 20 | - |
| Flame retardant | | | - | - | 1 |
| Organic binder | Polyester fibers | | 10 | 10 | 10 |
| Content of flame retardant | | | 0.8 | 0.8 | 1 |
| Bulk density (g/cm³) | | | 0.05 | 0.05 | 0.05 |
| Airflow resistance (Pa sec/m²) | | | 2.03×10⁴ | 2.05×10⁴ | 2.09×10⁴ |
| Young's modulus (Pa) | | | 2.24×10⁴ | 2.20×10⁴ | 2.32×10⁴ |
| UL 94 V-0 test | Total combustion time (sec) | | 40 | 46 | >50 |
| | Distance of spread (mm) | | 84 | >117 | >117 |
| | Glowing time (sec) | | 0 | 0 | 0 |
| | Molten droplet combustibility | | Ignition did not occur | Ignition did not occur | Ignition did not occur |
| | Overall evaluation | | Acceptable | Unacceptable | Unacceptable |

### Example 9

A fiber assembly having the composition shown in Table 4 was obtained in the same manner as in Example 3, except that flame-retardant polyester fibers in which 5 mass% of chloropropyl phosphate (flame retardant) was dispersed in a polyester, were used as the flame retardant-containing fibers in the mixing step instead of the flame-retardant polyester fibers in which 4 mass% of tris(β-chloropropyl) phosphate (flame retardant) was dispersed in a polyester, and the fusion step was performed to obtain a fibrous formed article having a felt-like porous structure (shape).

In Table 4, the item "Content of flame retardant" corresponds to the ratio (mass%) of the total mass of the flame retardant included in the flame retardant-containing fibers to the total mass of the fibrous formed article.

The bulk density, the airflow resistance, and the Young's modulus of the fibrous formed article were respectively measured. The results are shown in Table 4.

### Evaluation of flame retardancy

The flame retardancy was evaluated as described above using the fibrous formed article. The results are shown in Table 4.

**TABLE 4**

| | | | Example 3 | Example 9 |
|---|---|---|---|---|
| Organic fibers | PET fibers | (mass%) | 70 | 70 |
| Flame retardant-containing fibers | Halogenated organophosphate: 4 wt% | | 20 | - |
| | organophosphate: 5 wt% | | - | 20 |
| Organic binder | Polyester fibers | | 10 | 10 |
| Content of flame retardant | | | 0.8 | 0.9 |
| Bulk density (g/cm³) | | | 0.05 | 0.05 |
| Airflow resistance (Pa sec/m²) | | | 2.03×10⁴ | 2.04x 10⁴ |
| Young's modulus (Pa) | | | 2.24×10⁴ | 2.25×10⁴ |
| UL 94 V-0 test | Total combustion time (sec) | | 40 | 48 |
| | Distance of spread (mm) | | 84 | 116 |
| | Glowing time (sec) | | 0 | 0 |
| | Molten droplet combustibility | | Ignition did not occur | Ignition did not occur |
| | Overall evaluation | | Acceptable | Acceptable |

### Evaluation of sound insulating properties

The sound insulating properties of the fibrous formed article obtained in Example 3 and the fibrous formed article obtained in Comparative Example 2 were evaluated by measuring the normal incidence sound absorption coefficient at each frequency (Hz) in accordance with ISO 10534-2 (normal incidence sound absorption method (transfer function method)). The results are shown in Table 5.

**TABLE 5**

| Frequency (Hz) | Normal incidence sound absorption coefficient | |
|---|---|---|
| | Comparative Example 2 | Example 3 |
| 500 | 0.184 | 0.200 |
| 630 | 0.238 | 0.260 |
| 800 | 0.315 | 0.350 |
| 1000 | 0.413 | 0.470 |
| 1250 | 0.521 | 0.540 |
| 1600 | 0.592 | 0.700 |
| 2000 | 0.705 | 0.840 |
| 2500 | 0.822 | 0.920 |
| 3150 | 0.909 | 0.970 |
| 4000 | 0.954 | 0.980 |
| 5000 | 0.951 | 0.940 |
| 6400 | 0.879 | 0.890 |

As is clear from the results shown in Tables 1 to 5, the fibrous formed articles obtained in Examples 1 to 9 including 50 to 80 mass% of the organic fibers, 10 to 40 mass% of the flame retardant-containing fibers, and 5 to 20 mass% of the organic binder, the ratio of the total mass of the flame retardant included in the flame retardant-containing fibers to the total mass of the fibrous formed article being 0.01 to 1.8 mass%, and the flame retardant being a melt drip regulator, exhibited the desired sound insulating properties and high flame retardancy (flame-extinguishing capability). It was thus confirmed that the fibrous formed articles obtained in Examples 1 to 9 can suitably be used as an automotive soundproof cover.

According to Examples 1 to 9, the fibrous formed article could be easily produced. It was thus confirmed that the desired automotive soundproof cover can be easily produced.

The embodiments of the invention thus provide an automotive soundproof cover that exhibits the desired sound insulating properties and high flame retardancy (flame-extinguishing capability), and a method that can easily produce the automotive soundproof cover.

## Claims

1. An automotive soundproof cover comprising a fibrous formed article that includes two or more types of fibers,
the fibrous formed article comprising 50 to 80 mass% of organic fibers, 10 to 40 mass% of flame retardant-containing fibers, and 5 to 20 mass% of an organic binder,
a ratio of a total mass of a flame retardant included in the flame retardant-containing fibers to a total mass of the fibrous formed article being 0.01 to 1.8 mass%, and
the flame retardant being a melt drip regulator,
wherein the melt drip regulator is one or more compounds selected from organophosphoric acids, organophosphates, and halogenated organophosphates.

2. The automotive soundproof cover according to claim 1, wherein the flame retardant is a halogenated organophosphate.

3. A method for producing the automotive soundproof cover according to claim 1 or 2, the method comprising:
a mixing step that mixes 50 to 80 mass% of organic fibers, 10 to 40 mass% of flame retardant-containing fibers, and 5 to 20 mass% of low-melting-point fibers having a melting point lower than that of the organic fibers to obtain a fiber assembly; and
a fusion step that exposes the fiber assembly to a temperature equal to or higher than the melting point of the low-melting-point fibers.

## Patentansprüche

1. Schalldichte Abdeckung für Fahrzeuge, umfassend einen faserförmig ausgebildeten Gegenstand, der zwei oder mehr Typen von Fasern enthält,
wobei der faserförmig ausgebildete Gegenstand 50 bis 80 Gew.-% organische Fasern, 10 bis 40 Gew.-% Brandschutzmittel-enthaltende Fasern und 5 bis 20 Gew.-% eines organischen Bindemittels umfasst,
ein Verhältnis einer Gesamtmasse eines Brandschutzmittels, enthalten in den Brandschutzmittel-enthaltenden Fasern, zu einer Gesamtmasse des faserförmig ausgebildeten Gegenstandes 0,01 bis 1,8 Gew.-% beträgt und
das Brandschutzmittel ein Schmelztropfregulierer ist,
wobei der Schmelztropfregulierer eine oder mehrere Verbindungen, ausgewählt aus Organophosphorsäuren, Organophosphaten und halogenierten Organophosphaten, ist.

2. Schalldichte Abdeckung für Fahrzeuge nach Anspruch 1, wobei das Brandschutzmittel ein halogeniertes Organophosphat ist.

3. Verfahren zur Herstellung der schalldichten Abdeckung für Fahrzeuge nach Anspruch 1 oder 2, wobei das Verfahren umfasst:
einen Mischungsschritt, der 50 bis 80 Gew.-% organischer Fasern, 10 bis 40 Gew.-% Brandschutzmittel-enthaltender Fasern und 5 bis 20 Gew.-% Fasern mit niedrigem Schmelzpunkt, die einen Schmelzpunkt niedriger als der der organischen Fasern aufweisen, mischt, um eine Faseranordnung zu erhalten; und
einen Verschmelzungsschritt, der die Faseranordnung einer Temperatur, die gleich oder höher als der Schmelzpunkt der Fasern mit niedrigem Schmelzpunkt ist, aussetzt.

## Revendications

1. Une couverture automobile insonorisée comprenant un article formé de fibres qui comprend deux ou plus types de fibres,
l'article formé de fibres comprenant 50 à 80% en masse de fibres organiques, 10 à 40% en masse de fibres comprenant un retardateur de flamme, et 5 à 20% en masse d'un liant organique,
un rapport de la masse totale de retardateur de flamme compris dans les fibres comprenant un retardateur de flamme par rapport à la masse totale de l'article formé de fibres étant entre 0.01 et 1.8% en masse, et
le retardateur de flamme étant un régulateur de gouttes en fusion,
dans laquelle le régulateur de gouttes en fusion est un composé sélectionné parmi les acides organophosphoriques, les organophosphates et les organophosphates halogénés.

2. La couverture automobile insonorisée selon la revendication 1, dans laquelle le retardateur de flamme est un organophosphate halogéné.

3. Procédé de fabrication de la couverture automobile insonorisée selon la revendication 1 ou 2, le procédé comprenant ;
une étape de mélange comprenant le mélange de 50 à 80% en masse de fibres organiques, 10 à 40% en masse de fibres comprenant un retardateur de flamme, et 5 à 20% en masse de fibres de faible point de fusion ayant un point de fusion inférieur à celui des fibres organiques afin d'obtenir un assemblage de fibres ; et
une étape de fusion comprenant l'exposition de l'assemblage de fibres à une température supérieure ou égale au point de fusion des fibres de faible point de fusion.
